# EUROPEAN PATENT APPLICATION

(11) **EP 2 085 628 A1**
(43) Date of publication of application: **05.08.2009**
(21) Application number: 07830363.3
(22) Date of filing: 23.10.2007
(51) Int. Cl.: F16C 33/76, F16J 15/32

(54) **SEALING DEVICE**

(30) Priority: 24.10.2006 JP 2006289000
(71) Applicant: JTEKT Corporation, Osaka-shi Osaka 542-8502 (JP); Koyo Sealing Techno Co., Ltd., Itano-gun, Tokushima 771-1295 (JP)
(72) Inventor: HOSAKA, Ryouhei, Osaka-shi Osaka 5428502 (JP); FUJIMOTO, Kazuya, Osaka-shi Osaka 5428502 (JP); SUNAGAWA, Masahide, Itano-gun Tokushima 7711295 (JP); FUJIKAWA, Toshiaki, Itano-gun Tokushima 7711295 (JP)
(74) Representative: Schaeberle, Steffen
(86) International application number: PCT/JP2007/070629
(87) International publication number: WO 2008/050755

(57) **Abstract**

An annular elastic portion is secured to an annular metal core portion. A through hole is provided which penetrates the metal core portion and the elastic portion in a radial direction. A porous member which has the properties of allowing free passage of air while inhibiting the passage of water and oil therethrough is secured to an outer peripheral surface of the metal core portion so as to completely block a radially outer opening of the through hole. An canopy member having a cover plate located on a radially outer side of the porous member is secured to the outer peripheral surface of the metal core portion.

## Description

### TECHNICAL FIELD

The present invention relates to a sealing device, and more particularly to a sealing device which is suitably used in a work roll of a rolling mill.

### BACKGROUND ART

Conventionally, as a sealing device, one described in JP-A-2002-178013 is known.

This sealing device is disposed in a roll neck supporting bearing of a work roll of a rolling mill. Specifically, this bearing has an inner ring, an outer ring, and tapered rollers, and the inner ring has a first inner ring and a second inner ring. An axial end surface of the first inner ring and an axial end surface of the second inner ring are abutted against each other in the axial direction. An annular groove is provided on outer peripheral surfaces of the axially abutted portions of the inner rings.

This sealing device is disposed in the annular groove. This sealing device includes an annular metal core portion and an elastic portion fixed to this metal core portion. The elastic portion includes a first seal lip in contact with an outer peripheral surface of the first inner ring and a second seal lip in contact with an outer peripheral surface of the second inner ring. Further, the sealing device has a third seal lip which is in contact with an axial end surface of the first inner ring and a fourth seal lip which is contact with an axial end surface of the second inner ring.

This sealing device prevents the entry into the interior of the bearing of cooling water and rolling oil which enters the annular groove after passing from the roll neck side between the abutted first and second inner rings. Here, further improvement has been desired in the performance of preventing the entry of the cooling water and rolling oil into the bearing interior.

### Disclosure of the Invention

### Problems that the Invention is to Solve

Accordingly, an object of the invention is to provide a sealing device which is capable of reliably preventing water and oil from entering the bearing interior.

### Means for Solving the Problem

To overcome this problem, a sealing device according to the present invention is characterized by comprising:
an annular metal core portion;
an annular elastic portion having a first seal lip which is in contact with an outer peripheral surface portion of a first inner ring constituting a part of a bottom surface of an annular groove formed on outer peripheral surfaces of those portions of the first inner ring and a second inner ring that are abutted against each other, and a second seal lip which is in contact with an outer peripheral surface portion of the second inner ring constituting a part of the bottom surface of the annular groove, the annular elastic portion being fixed to the metal core portion;
a through hole which penetrates the metal core portion and the elastic portion in a radial direction, a radially inner opening of the through hole being located between the first seal lip and the second seal lip;
a porous member which blocks a radially outer opening of the through hole and has properties of allowing free passage of air while inhibiting the passage of water and oil therethrough; and
an canopy portion having a covering portion located on a radially outer side of the porous member.

The above-described phrase "those portions of the first inner ring and the second inner ring that are abutted against each other" shall be construed to, of course, refer to mutually contiguous portions of the first inner ring and the second inner ring in a state in which the first inner ring and the second inner ring are abutted against each other in the axial direction, and this phrase "those portions of the first inner ring and the second inner ring that are abutted against each other" shall also be construed to refer to mutually contiguous portions of the first inner ring and the second inner ring in a state in which the first inner ring and the second inner ring are opposed to each other in non-contact in the axial direction through an axial gap therebetween.

Further, the above-described phrase "penetrates ... in a radial direction" refers to a state in which the through hole penetrates the metal core portion and the elastic portion in a state in which at least a part of the through hole has a radially extending component. From this fact, the through hole may penetrate the metal core portion and the elastic portion in a state in which at least a part of the through hole has an axially or circumferentially extending component.

According to the invention, the through hole is provided which has a radially inner opening located between the first seal lip and the second seal lip and which penetrates the metal core portion and the elastic portion in the radial direction. Further, the porous member is provided which blocks a radially outer opening of the through hole and has the properties of allowing the free passage of air while inhibiting the passage of water and oil therethrough. Therefore, in a case where the internal temperature of the bearing has suddenly dropped and the air pressure within the bearing has been set to negative pressure, air smoothly enters the bearing interior from the outside through the porous member, so that the negative pressure within the bearing can be overcome speedily. Accordingly, it is possible to remarkably reduce the action whereby water and oil which are present on the radially inner side of the inner ring, together with air, tend to enter the bearing interior when the pressure within the bearing is negative pressure.
Furthermore, since the water and oil cannot pass the aforementioned porous member, it is possible to reliably prevent the water and oil which are present on the radially inner side of the inner ring from entering the bearing interior.

Further, according to the invention, since the cover plate is provided which has a covering portion disposed on the radially outer side of the aforementioned porous member, it is possible to inhibit the lubricant inside the bearing from coming into contact with the porous member. Therefore, it is possible to suppress a decline of air permeability of the porous member, and the air permeability of the porous member can be rendered excellent over extended periods of time.

### ADVANTAGES OF THE INVENTION

According to the sealing device according to the invention, the through hole is provided which has a radially inner opening located between the first seal lip and the second seal lip in the axial direction and which penetrates the metal core portion and the elastic portion in the radial direction. Further, the porous member is provided which blocks a radially outer opening of the through hole and has the properties of allowing the free passage of air while inhibiting the passage of water and oil therethrough. Therefore, it is possible to remarkably reduce the action whereby water and oil, together with air, tend to enter the bearing interior when the pressure within the bearing is negative pressure. Furthermore, since the water and oil cannot pass the aforementioned porous member, it is possible to reliably prevent the water and rolling oil which are present on the radially inner side of the inner ring from entering the bearing interior.

Further, according to the invention, since the cover plate is provided which has a covering portion disposed on the radially outer side of the aforementioned porous member, it is possible to inhibit the lubricant inside the bearing from coming into contact with the porous member, thereby making it possible to render the air permeability of the porous member excellent over extended periods of time.

### BRIEF DESCRIPTION OF THE DRAWINGS

Fig. 1 is an axial cross-sectional view illustrating a sealing device according to an embodiment of the invention; and
Fig. 2 is a plan view, taken from a radially outer side, of a cover plate.

### DESCRIPTION OF REFERENCE NUMERALS AND SIGNS

1: sealing device
3: inner ring
4: first inner ring
4c: outer peripheral portion of the first inner ring
5: second inner ring
5c: outer peripheral portion of the second inner ring
6: outer ring
7, 8: tapered rollers
10: annular groove
21: metal core portion
22: elastic portion
24: first seal lip
25: second seal lip
28: through hole
29: porous member
40: cover plate
41, 42: spacers

### BEST MODE FOR CARRYING OUT THE INVENTION

Hereafter, a more detailed description of the invention will be given by an illustrated embodiment.

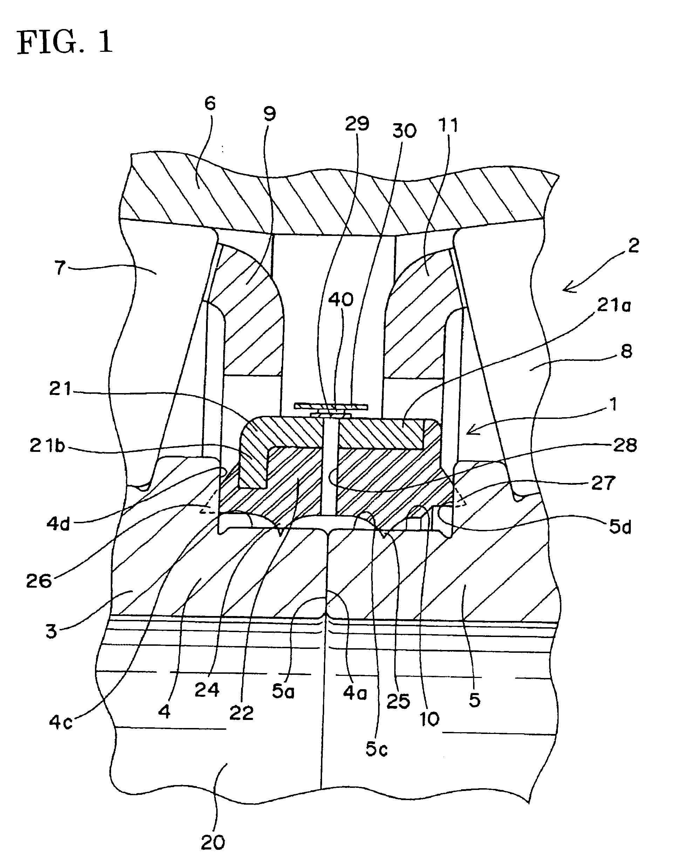

Fig. 1 is an enlarged cross-sectional view of a vicinity of a roll neck 20 of a work roll of a rolling mill, and is an axial cross-sectional view illustrating a sealing device 1 according to an embodiment of this invention.

This sealing device 1 is disposed in a tapered roller bearing 2 as a roll neck-use bearing for supporting the roll neck 20 of the work roll of the rolling mill.

The tapered roller bearing 2 is disposed between the roll neck 20 and a tubular housing (not shown). This tapered roller bearing 2 has an inner ring 3, an outer ring 6, and tapered rollers 7 and 8. Further, this tapered roller bearing 2 is provided with two sealing devices in addition to the sealing device 1. Specifically, to seal from the outside a space between the inner ring 3 and the outer ring 6 of this tapered roller bearing 2, the tapered roller bearing 2 has a second sealing device (not shown) which is fixed to the outer ring 6 disposed on one end side of the tapered roller bearing 2 and slides on the inner ring 3 or a member rotating integrally with the inner ring 3, as well as a third sealing device (not shown) which is fixed to the outer ring 6 disposed on the other end side of the tapered roller bearing 2 and slides on the inner ring 3 or a member rotating integrally with the inner ring 3.

The aforementioned inner ring 3 is clearance fitted to the roll neck 20. The inner ring 3 includes a first inner ring 4 and a second inner ring 5. An axial end surface 4a of the first inner ring 4 and an axial end surface 5a of the second inner ring 5 are axially abutted against each other. An annular groove 10 is formed on outer peripheral surfaces of the axially abutted portions of the inner ring 3.

The aforementioned outer ring 6 has two tapered raceway surfaces which are axially adjacent to each other. The outer ring 6 is clearance fitted to an inner peripheral surface of the aforementioned housing. The aforementioned tapered rollers 7 are arranged in such a manner as to be spaced apart at predetermined intervals in the circumferential direction in a state of being retained between the tapered raceway surface of the first inner ring 4 and one tapered raceway surface of the outer ring 6 by a cage 9. Further, the aforementioned tapered rollers 8 are arranged in such a manner as to be spaced apart at predetermined intervals in the circumferential direction in a state of being retained between the tapered raceway surface of the second inner ring 5 and the other tapered raceway surface of the outer ring 6 by a cage 11.

The sealing device 1 according to the embodiment of the invention is fitted and fixed in the annular groove 10. The sealing device 1 includes an annular metal core portion 21, an annular elastic portion 22, a porous member 29, and a canopy member 30.

The aforementioned metal core portion 21 is formed of a metallic material. The metal core portion 21 is substantially L-shaped in cross section in the axial direction. Specifically, the metal core portion 21 has a substantially cylindrical portion 21a and a bent portion 21b continuing to the cylindrical portion 21a. The cylindrical portion 21a extends substantially in the axial direction. The aforementioned bent portion 21b constitutes an end portion of the first inner ring 3 side of the aforementioned metal core portion 21, and is bent radially inward from the axial direction.

Meanwhile, the aforementioned elastic portion 22 is formed of an elastic material. The elastic portion 22 is secured to the metal core portion 21. The elastic portion 22 is located radially inwardly of an outer peripheral surface of the cylindrical portion 21a of the metal core portion 21. The elastic portion 22 has four annular seal lips 24, 25, 26, and 27. The first seal lip 24 is in contact with an outer peripheral surface portion 4c of the first inner ring 4 constituting the position of a bottom surface of the annular groove 10, and the second seal lip 25 is in contact with an outer peripheral surface portion 5c of the second inner ring 5 constituting a part of the bottom surface of the annular groove 10. Further, the third seal lip 26 is in contact with an axial end surface 4d of the first inner ring 4 constituting a part of a side surface of the annular groove 10, and the fourth seal lip 27 is in contact with an axial end surface 5d of the second inner ring 5 constituting a part of another side surface of the annular groove 10.

The metal core portion 21 and the elastic portion 22 have through holes 28 which extend in the radial direction and penetrate the cylindrical portion 21a of the metal core portion 21 and the elastic portion 22 in the radial direction. A radially inner opening of each of the through holes 28 is located between the first seal lip 24 and the second seal lip 25 in the axial direction. The plurality of through holes 28 are formed at predetermined intervals in the circumferential direction.

The aforementioned porous members 2 9 are formed of Gore-Tex (trade name) obtained by subjecting a polytetrafluoroethylene material to special treatment. The porous members 2 9 are secured to an outer peripheral surface of the cylindrical portion 21a of the metal core portion 21 so as to completely block the radially outer openings of the through holes 28. The porous members 29 are provided in a number corresponding to the number of the through holes 28. The porous members 29 have a multiplicity of infinitesimal ventilation pores and hence have the properties of allowing the passage of air while inhibiting the passage of water and oil therethrough.

The canopy members 30 are provided in a number corresponding to the number of the porous members 29. The canopy member 30 has a cover plate 40 and spacers 41 and 42. Since the spacer 41 is disposed on a near side in Fig. 1 which is a cross-sectional view, the spacer 41 is not shown in the drawing, and is disposed in circumferentially spaced-apart relation to the spacer 42. The aforementioned cover plate 40 is disposed on the radially outer side of the porous member 29. The cover plate 40 in its entirety constitutes a covering portion. Radially inner end surfaces of the spacers 41 and 42 are secured to the cylindrical portion 21a, and radially outer end surfaces of the spacers 41 and 42 are secured to a radially inner cylindrical surface-shaped end surface of the cover plate 40. The spacers 41 and 42 play the role of spacing the cover plate 40 radially apart from the porous member 29. The cover plate 40 and the porous member 29 are radially opposed to each other with a radial gap (with a radial length of 1 mm or thereabouts) therebetween.

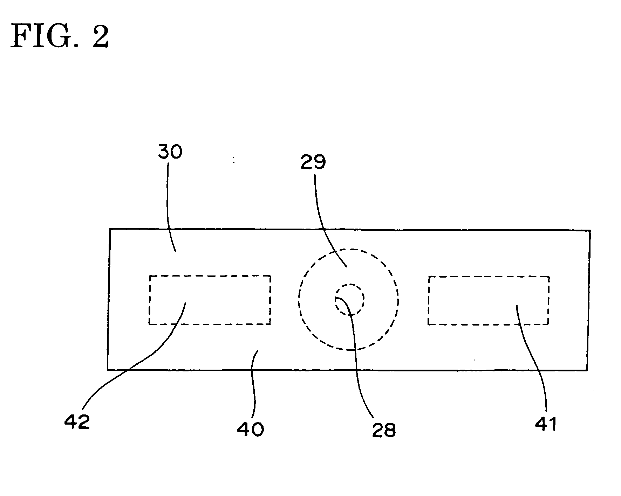

Fig. 2 is a plan view, taken from the radially outer side, of the cover plate 40.

In the plan view shown in Fig. 2, the cover plate 40 and the spacers 41 and 42 have rectangular shapes, and the porous member 29 has a circular shape. Further, as shown in Fig. 2, in a plan view taken from the radially outer side, the porous member 29 is present on the interior side relative to the cover plate 40 (at a position concealed by the cover plate 40). The cover plate 40 plays the role of inhibiting a lubricant in the bearing from contacting the surface of the porous member 29.

According to the sealing device 1 according to the above-described embodiment, the through holes 28 are provided which have radially inner openings each located between the first seal lip 24 and the second seal lip 25 and which penetrate the metal core portion 21 and the elastic portion 22 in the radial direction. Further, the porous members 29 are provided which block the radially outer openings of the through holes 28 and have the properties of allowing the free passage of air while inhibiting the passage of water and oil therethrough. Therefore, in a case where the internal temperature of the tapered roller bearing 2 has suddenly risen and the air pressure within the tapered roller bearing 2 has become high, air is smoothly released from inside the tapered roller bearing 2 to outside the tapered roller bearing 2 through the porous members 29, so that the pressure within the tapered roller bearing 2 can be lowered speedily. On the other hand, in a case where the internal temperature of the tapered roller bearing 2 has suddenly dropped and the air pressure within the tapered roller bearing 2 has been set to negative pressure, air smoothly enters the interior of the tapered roller bearing 2 through the porous members 29, so that the negative pressure within the tapered roller bearing 2 can be overcome speedily. Accordingly, it is possible to remarkably reduce the action in which the cooling water and rolling oil which is present on the radially inner side of the inner ring 3 tend to enter the interior of the tapered roller bearing 2 together with air when the pressure within the tapered roller bearing 2 is negative pressure. Furthermore, since the cooling water and rolling oil cannot pass the porous members 29, it is possible to reliably prevent the cooling water and rolling oil which are present on the radially inner side of the inner ring 3 from entering the interior of the tapered roller bearing 2.

Further, according to the sealing device 1 according to the above-described embodiment, since the cover plates 40 are provided which are each disposed on the radially outer side of the porous member 29, it is possible to inhibit the lubricant inside the tapered roller bearing 2 from coming into contact with the porous members 2 9. Therefore, it is possible to suppress a decline of air permeability of the porous members 29, and the air permeability of the porous members 29 can be rendered excellent over extended periods of time.

It should be noted that although in the sealing device 1 according to the above-described embodiment, the sealing device 1 is installed in the tapered roller bearing 2, the sealing device in this embodiment may be installed in a rolling bearing other than the tapered roller bearing, such as a cylindrical roller bearing and a ball bearing.

Further, although in the sealing device 1 according to the above-described embodiment the tapered roller bearing 2 in which the sealing device 1 is installed is constructed by the combination of the outer ring 6 having two tapered raceway surfaces, the first inner ring 4, the second inner ring 5, and the tapered rollers in two rows in the axial direction, the sealing device in this embodiment may be installed in a rolling bearing having tapered rollers arranged in three or more rows in the axial direction. Further, the sealing device in this embodiment may be installed in a rolling bearing in which two or more outer rings are combined in the axial direction. For example, in the case of rolling bearings having tapered rollers arranged in four rows in the axial direction, there are a configuration in which end surfaces of two outer rings are abutted against each other in the axial direction and a configuration in which end surfaces of two outer rings are abutted against each other with an outer ring spacer interposed therebetween. In such a case, advantages similar to those of the above-described embodiment can be obtained by interposing a sealing member for sealing between a housing and a second sealing device and a sealing member for sealing between the housing and a third sealing device, or by interposing sealing members for sealing between the housing and the respective outer rings, and by disposing the sealing device 1 of the invention in the annular groove 10 formed on outer peripheral surfaces of those portions of the first inner ring 4 and the second inner ring 5 that are abutted against each other in the axial direction so as to seal the space between the inner ring 3 and the outer ring 6 of the tapered roller bearing 2 from the outside.

Further, although in the sealing device 1 according to the above-described embodiment the material of the porous members 29 is Gore-Tex, as the material of the porous members, it is possible to use a material in which a polytetrafluoroethylene sheet formed by being subjected to stretching processing and a nonwoven fabric formed by compressing hair and fibers are adhered to a polytetrafluoroethylene material. In other words, the material of the porous members may be any material insofar as it is a material having the properties of allowing a gas to permeate but not allowing a liquid to permeate.

Further, although in the sealing device 1 according to the above-described embodiment the plurality of through holes 28 which extend in the radial direction are provided, a single through hole may be provided. Furthermore, the through hole may be of any shape insofar as the radially inner opening is located between the first lip and the second lip in the axial direction, and the radially outer opening is closed in the lubricant-sealed space of the bearing, and the through hole may not extend in an accurately radial direction or may not be straight.

Further, in the sealing device 1 according to the above-described embodiment the cover plate 40 in its entirety constitutes a covering portion, and the cover plate 40 is radially spaced apart from the porous members 29 by the spacers 41 and 42. However, in this invention, a part of the cover plate may be configured to constitute the covering portion. For example, it is also possible to use a cover plate which has a fixed portion which is fixed to the outer peripheral surface of the cylindrical portion of the metal core portion, a radially extending portion extending from the fixed portion in the radial direction, and an axially extending portion connected to the radially extending portion and extending in the axial direction, by omitting the spacers. In this case, it goes without saying that the axially extending portion constitutes the covering portion.

Further, in the sealing device 1 according to the above-described embodiment, in the plan view of the cover plate 40 constituting the covering portion taken from the radially outer direction, the cover plate 40 and the spacers 41 and 42 have rectangular shapes, and the porous member 29 has a circular shape. In the invention, in the plan view of the cover plate taken from the radially outer direction, the covering portion and the spacers may have shapes other than rectangular shapes, such as circular shapes, and the porous member 29 may have another shape other than a circular shape. In other words, shapes of the covering portion, the spacers, and the porous member may be any shapes insofar as the porous member is present on the interior side relative to the covering portion (at a position concealed by the covering portion).

## Claims

1. A sealing device comprising:
an annular metal core portion;
an annular elastic portion having a first seal lip which is in contact with an outer peripheral surface portion of a first inner ring constituting a part of a bottom surface of an annular groove formed on outer peripheral surfaces of those portions of the first inner ring and a second inner ring that are abutted against each other, and a second seal lip which is in contact with an outer peripheral surface portion of the second inner ring constituting a part of the bottom surface of the annular groove, the annular elastic portion being fixed to the metal core portion;
a through hole which penetrates the metal core portion and the elastic portion in a radial direction, a radially inner opening of the through hole being located between the first seal lip and the second seal lip;
a porous member which blocks a radially outer opening of the through hole and has properties of allowing free passage of air while inhibiting the passage of water and oil therethrough; and
an canopy portion having a covering portion located on a radially outer side of the porous member.

2. The sealing device according to claim 1, wherein the canopy portion is constituted by a cover plate constituting the covering portion and a plurality of spacers, and the plurality of spacers are arranged by being spaced apart in a circumferential direction.

3. The sealing device according to claim 1, wherein the porous member is formed of Gore-Tex obtained by subjecting a polytetrafluoroethylene material to special treatment.
